# EUROPÄISCHE PATENTSCHRIFT

(11) **EP 0 487 877 B1**
(45) Veröffentlichungstag und Bekanntmachung des Hinweises auf die Patenterteilung: **25.05.1994**
(21) Anmeldenummer: 91117450.6
(22) Anmeldetag: 12.10.1991
(51) Int. Cl.: B63B 5/06, B29C 73/02

(54) **Bootsdeckbelag und Verfahren zu seiner Herstellung**
Method for the production of a boat deck laminate
Méthode pour la production d'un pont de bateau laminé

(30) Priorität: 30.11.1990 DE 4038181
(43) Veröffentlichungstag der Anmeldung: 03.06.1992
(73) Patentinhaber: Wolter, Luitgard, D-64823 Gross-Umstadt (DE)
(72) Erfinder: Wolter, Luitgard, D-64823 Gross-Umstadt (DE)
(74) Vertreter: Müller-Wolff, Thomas, Dipl.-Ing.

(56) Entgegenhaltungen:
- US-A- 3 949 144
- US-A- 4 511 621
- US-A- 4 528 305
- US-A- 4 559 240
- US-A- 4 896 727
- SOVIET PATENTS ABSTRACTS Section PQ, Week 7542, Derwent Publications Ltd., London, GB; Class P4A, AN 433186

## Beschreibung

Die Erfindung betrifft einen Bootsdeckbelag sowie ein Verfahren zu seiner Herstellung.

Der Bootsdeckbelag kann auch nachträglich auf bereits benutzte bzw. undichte Bootsdecks aufgetragen werden.

Die DE-OS 32 01 251 beschreibt einen Bootsrumpf aus glasfaserverstärktem Kunststoff, der mit einer Beplankung aus Holz versehen ist. Die Beplankung aus Holz wird an spantenähnlichen Heftleisten befestigt, die in dem Bootsrumpf aus dem glasfaserverstärkten Kunststoff einlaminiert sind. Dadurch soll ein preiswerter Bootsrumpf mit einer Beplankung aus Holz geschaffen werden, wobei der fertige Bootsrumpf die technischen Vorteile eines Kunststoffrumpfes mit der Schönheit eines Holzrumpfes verbinden soll.

Obwohl auch bei Kunststoffbooten zum Teil Bootsdecks aus Holz verwendet werden, ist ein derartiges Verfahren bisher für Bootsdecks nicht angewandt worden. Es ist bereits bekannt, zum Auffüllen von schadhaften oder ausgebrochenen Holzteilen eine Mischung aus Polyurethanharz und Sägespänen zu verwenden. Als Beschichtung für Bootsdecks sind solche Mischungen bisher noch nicht verwendet worden, da sie sich nur für kleinflächige Reparaturen eignen.

Bei Stahl- bzw. Aluminiumbooten vermeidet man die Montage von Holzdecks, da durch Undichtigkeiten nach wenigen Jahren Korrosionsgefahr besteht, die nur durch das Entfernen des Holzdecks unter Kontrolle gehalten werden kann.

Bisher wurden Decks aus diesen Bootsbaumaterialien entweder nur mit Farbe behandelt, oder es wurde ein Belag, z. B. aus einem Kunststoff-Korkgemisch, aufgeklebt. Während Farbe in kurzen Zeitabständen erneuert werden muß, sehen Beläge aus Kunststoff-Korkgemischen infolge abgestoßener Ecken und Kanten aufgrund Loslösung nach einiger Zeit unansehnlich aus. Außerdem verliert die Schiffs- bzw. Decksform durch großflächige Anstriche oder Platten an Geltung.

Kunststoffboote besitzen häufig keine Holzdecks, sie sind dort auch nicht erforderlich und werden allenfalls aus Dekorationsgründen angebracht. Die Verwendung von Holzdecks auf Kunststoffbooten ist schwierig und dadurch nicht kostengünstig.

Aufgabe der vorliegenden Erfindung ist es, einen Belag für ein Bootsdeck zu schaffen, der leicht und problemlos auch nachträglich anbringbar ist, ohne daß beispielsweise auf Segelbooten vorhandene Beschläge, Klampen, Winschen, Relingsstützen und dergleichen vorher entfernt werden müssen. Der Belag soll pflegebedarfslos und unverwüstlich sein und die Möglichkeit eröffnen, die Struktur eines bereits vorhandenen undichten oder beschädigten Bootsdecks aus Holz nachzubilden.

Gelöst wird diese Aufgabe durch einen Bootsdeckbelag gemäß dem Hauptanspruch sowie ein Verfahren zu dessen Herstellung gemäß dem ersten Verfahrensanspruch.

Der erfindungsgemäße Bootsdeckbelag besteht aus mindestens zwei Schichten, vorzugsweise jedoch drei Schichten, aber ggfs. auch aus vier, fünf oder mehr, die nacheinander aufgetragen werden. Die Schichten sind zusammengesetzt aus einem Gemisch mit einem langsam härtenden elastischen Epoxyharz sowie einem Härter für das Epoxyharz. Außerdem enthält das Gemisch einen festen, körnigen bzw. feinteiligen Füllstoff von niedriger Dichte, z. B. Sägespäne, Kork, Holzabrieb, Styropor oder dgl.. Besonders bevorzugt als Füllstoff sind Sägespäne, da hierdurch ein holzartiges Aussehen erzielt wird.

Als Epoxyharze werden die üblichen Vertreter dieser Klasse verwendet, die langsam aushärten, d. h. eine längere Aushärtezeit ausweisen, z. B. mehr als drei und bis zu achtundvierzig Stunden, bevorzugt etwa vierundzwanzig Stunden. Als Härter bzw. Vernetzer werden Amine, wie z. B. Triäthanolamin, oder Säureanhydride, wie z. B. Phtalsäureanhydrid verwendet. Über Epoxyharze und deren Härter existiert eine umfangreiche Literatur, so daß hier auf weitere Einzelheiten verzichtet werden kann.

Es ist bekannt, die Epoxyharze bzw. die Härter so mit Streckmitteln, Lösungsmitteln und dergleichen zu vermischen, daß vergleichbare Volumenteile miteinander vermischt ein entsprechend den geforderten Aushärtezeiten härtbares Gemisch ergeben. Von solchen Produkten werden vorzugsweise Epoxyharze und Härter in einem Verhältnis von 3 : 1 bis 1 : 3 Volumenteilen eingesetzt, hauptsächlich im Verhältnis von 1 : 1 Volumenteilen. Der Anteil an Füllstoffen im Gesamtgemisch kann etwa 20 bis 80 Vol.-% betragen, bezogen auf das Gesamtgewicht von Epoxyharz, Härter und Füllstoff. Eine bevorzugte Mischung besteht aus 25 Vol.-% Epoxyharz, 25 Vol.-% Härter und 50 Vol.-% Füllstoff.

Dem Gemisch können je nach den jeweiligen Farberfordernissen die entsprechenden Farbstoffe bzw. Farbpigmente zugemischt werden. Dies ist besonders dann interessant, wenn mit dem Bootsdeckbelag ein dekoratives Muster gebildet werden soll, beispielsweise in Form einer natürlichen Holzbeplankung. In solchen Fällen können die Zwischenräume zwischen Teilen des Belages in Form von natürlichen Holzplanken mit einem Belag imitiert werden, der entsprechende Farbstoffe bzw. -pigmente enthält, z. B. weiße oder schwarze Pigmente.

Ein dekoratives Muster kann auch dadurch erzeugt werden, daß bestimmte Teile des Belags, die das Muster nicht enthalten sollen, mit einer Trennschicht abgedeckt werden, so daß beim Auftragen insbesondere einer farblich getönten Schicht nur bestimmte Teile des Bootsdeckbelages bleibend beschichtet werden, während im übrigen die Beschichtung auf der Trennschicht enthalten ist, die später wieder entfernt werden kann. Nach dem Entfernen der Trennschicht ergibt sich dann das gewünschte Muster.

Der Bootsdeckbelag wird so aufgetragen, daß zunächst eine untere Schicht auf das gesäuberte Bootsdeck aufgebracht wird. Diese Schicht wird soweit aushärten lassen, daß die darauffolgende nächste Schicht ohne Beschädigung der unteren Schicht aufgetragen werden kann. Das Auftragen nach dem Aushärten der jeweiligen Schicht kann beliebig oft wiederholt werden, wobei im allgemeinen ein zwei- bis fünfmaliges Auftragen einer Schicht völlig hinreichend ist, um einen widerstandsfähigen Bootsdeckbelag zu erhalten.

Will man ein bestimmtes dekoratives Muster auf dem Bootsdeckbelag erzeugen, so wird von dem bereits genannten Verfahren des Aufbringens von Trennschichten Gebrauch gemacht. Als Trennschichten eignen sich insbesondere abziehbare Klebefolien, die auf diejenigen unteren Schichten aufgebracht werden, die nach dem Auftragen der darüberliegenden Schichten und nach dem Abziehen der Trennschichten das gewünschte Muster im Bootsdeckbelag ergeben.

In einer bevorzugten Ausführungsform der Erfindung läßt sich beispielsweise ein Bootsplankendeck aus Holz nachbilden, wobei zu Reparaturzwecken auch eine bereits bestehende hölzerne Bootsplankendecksstruktur nachgebildet und überschichtet werden kann. Dazu werden zunächst etwa ein bis vier Schichten nacheinander aufgetragen, wie bereits beschrieben worden ist. Nach dem Aushärten der obersten der bereits aufgetragenen Schichten wird eine abschließend zweitoberste Schicht, ggfs. zuvor auch eine abschließend drittoberste Schicht aufgetragen, die einen Farbstoff enthalten kann, der dieser Schicht ein Aussehen verleiht, das den Zwischenräumen der hölzernen Bootsplanken entspricht, die sich im allgemeinen von der Holzfarbe der Planken abhebt. Zu diesem Zwecke kann z. B. ein schwarzer oder weißer Farbstoff bzw. ein Farbpigment zugemischt werden.

Nach dem Aushärten dieser Schicht wird diese mit Klebefolien-Streifen abgeklebt, und zwar dergestalt, daß breitere Klebefolien-Streifen verwendet werden, deren Breite der Breite der nachzubildenden Holzplanken entspricht. Zwischen und neben diesen Klebefolien-Streifen werden schmalere Streifen angebracht, die in ihrer Dimensionierung den nachzubildenden Zwischenräumen zwischen den Planken entsprechen, d. h. also, daß jeweils nebeneinander breitere und schmalere Klebefolien-Streifen auf diese Schicht aufgeklebt werden, wobei die Klebefolien-Streifen seitlich aneinander anschließen. Nach dem Aufbringen der schmaleren und breiteren Klebefolien-Streifen werden die breiteren wieder entfernt, so daß lediglich die schmaleren, die die Zwischenräume zwischen den nachzubildenden Bootsplanken abdecken, auf der darunterliegenden Schicht aufgeklebt bleiben.

Auf die so vorbehandelte Schicht wird dann die oberste Schicht, ggfs. zwei obere Schichten, aufgetragen, die z. B. aufgrund der Beimischung von Holzspänen das Aussehen der Bootsplanken imitieren. Die schmaleren Klebefolien-Streifen werden dann abgezogen, wodurch an den nachzubildenden Zwischenräumen zwischen den Bootsplanken wieder die darunterliegende Schicht mit der Ausgestaltung der Zwischenräume zum Vorschein kommt.

Nach dem Aushärten ergibt sich somit ein Bootsdeck mit einem Plankenmuster, das beliebig ausgeführt werden kann und das nur durch die Ausgestaltung der breiteren und schmaleren Klebefolien-Streifen bestimmt wird. Mit dieser Methode lassen sich auch beschädigte Bootsdecks naturgetreu reparieren, ohne daß die natürliche Struktur des Bootsdecks verändert werden muß.

Der Vorteil des erfindungsgemäßen Belags für Bootsdecks besteht hauptsächlich in der problemlosen nachträglichen Anbringung. Alte unansehnliche und undichte Holzdecks können ohne großen Aufwand gleichzeitig verschönert und abgedichtet werden und je nach Bedarf geschliffene oder rutschfeste Oberflächen erhalten, letzteres beispielsweise durch Aufstreuen von Sand oder dergleichen auf die noch nicht ausgehärtete Oberschicht. Die optische Form des Originalholzdecks kann bei der Reparatur erhalten bleiben, wobei ein pflegebedarfsloser und unverwüstlicher Belag erhalten wird.

Die Erfindung wird nachfolgend anhand der Zeichnungen in einem Ausführungsbeispiel näher erläutert.
- Fig. 1: zeigt einen senkrechten Schnitt durch eine Bootsdeckbeschichtung mit insgesamt vier Schichten;
- Fig. 2: zeigt eine Draufsicht auf die Bootsdeckbeschichtung der Figur 1;
- Fig. 3: zeigt den Belag der Figur 1 nach Abziehen der Klebefolien-Streifen 16;
- Fig. 4: zeigt den Belag der Figur 3 nach Aufbringen der oberen Schicht;
- Fig. 5: zeigt den fertigen Belag nach Abziehen der Klebefolien-Streifen 18;
- Fig. 6: zeigt eine Beschichtung eines kompletten Bootsdecks in einer Ansicht von oben.

Auf das Bootsdeck 10, das beispielsweise undicht oder beschädigt ist, wird eine untere Schicht 12 gleichmäßig aufgetragen, die aus einem Gemisch von 25 Vol.-Teilen Epoxyharz, 20 Vol.-Teilen Härter und 25 Vol.-Teilen Sägespäne besteht. Nach dem Aushärten dieser Schicht wird eine zweite Schicht 14 aufgetragen, die von gleicher Zusammensetzung ist wie die Schicht 12, aber zusätzlich einen Farbstoff enthält, der dem Gemisch die gewünschte Farbe verleiht, die die späteren Plankenzwischenräume aufweisen sollen. Nach dem Aushärten der Schicht 14 werden auf diese breitere Klebefolien-Streifen 16 und schmalere Klebefolien-Streifen 18 parallel nebeneinander aufgeklebt, wobei die Zwischenräume zwischen den Klebefolien-Streifen möglichst eng gehalten werden.

Danach werden die breiteren Klebefolien-Streifen wieder entfernt. Sie dienen somit lediglich dazu, die schmaleren Klebefolien-Streifen in parallel ausgerichteter From auf den Bootsdeckbelag aufzubringen.

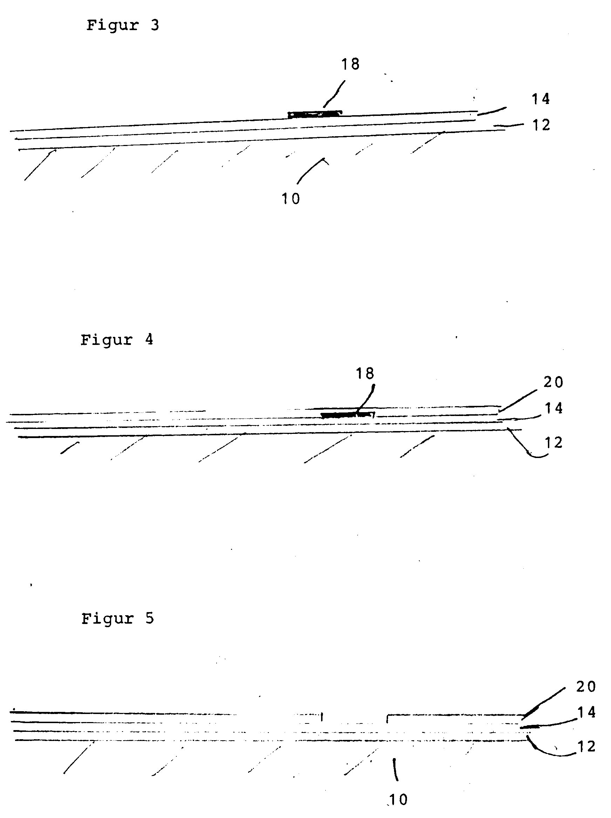

Anschließend wird dann die obere Schicht 20 auf die Schicht 14 bzw. die Klebefolien-Streifen 18 aufgetragen. Wenn die obere Schicht 20 soweit ausgehärtet ist, daß die Elastizität noch ausreicht, um die darunterliegende Schicht der schmaleren Klebefolien-Streifen 18 abzuziehen, werden diese abgezogen. Damit kommt an den Stellen, an denen die schmaleren Klebefolien-Steifen 18 abgezogen worden sind, die darunterliegende Schicht 14 zum Vorschein, die durch die Beimischung eines entsprechenden Farbstoffes den Eindruck der Bootsplankenzwischenräume wiedergibt. Man erhält auf diese Weise einen Bootsdeckbelag, der eine natürliche Holzplankenstruktur nachbildet, wie er z. B. in der Figur 3 gezeigt ist.

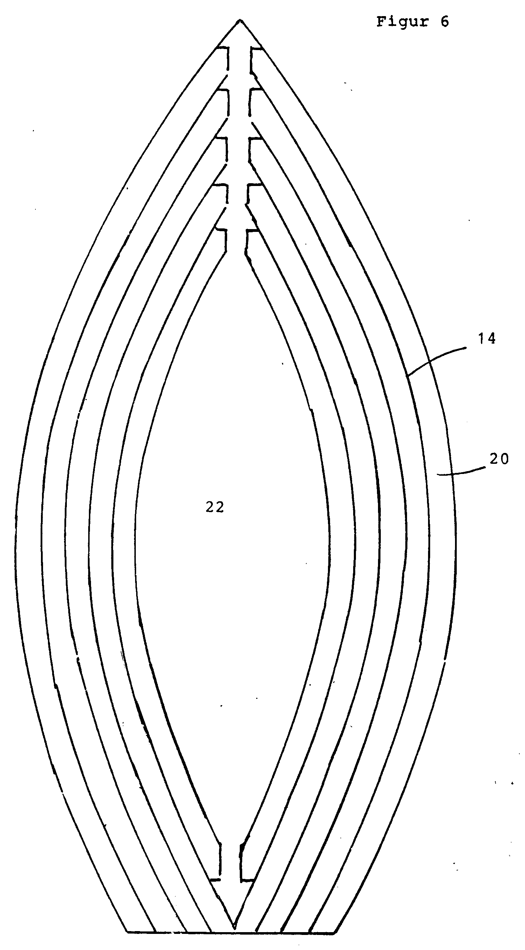

In der Figur 6 ist die obere Schicht 20 größerer Breite zu erkennen, die jeweils seitlich an eine zweite Schicht 14 von unterschiedlicher Farbgestaltung anschließt, die den Eindruck der Plankenzwischenräume wiedergibt. In der Mitte des Bootes befinden sich die Kajütenräume 22.

Die Erfindung wird nachfolgend anhand der Zeichnungen in einem Ausführungsbeispiel näher erläutert.

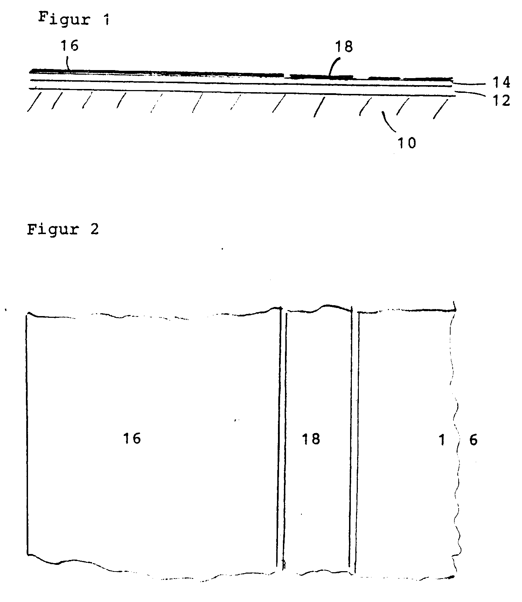

- Figur 1 zeigt: einen senkrechen Schnitt durch eine Bootsdeckbeschichtung mit insgesamt vier Schichten;
- Figur 2 zeigt: eine Draufsicht auf die Bootsdeckbeschichtung der Figur 1;
- Figur 3 zeigt: den Belag der Fig. 1 nach Abziehen der Klebefolien-Streifen 16;
- Figur 4 zeigt: den Belag der Fig. 3 nach Aufbringen der oberen Schicht;
- Figur 5 zeigt: den fertigen Belag nach Abziehen der Klebefolien-Streifen 18;
- Figur 6 zeigt: eine Beschichtung eines kompletten Bootsdecks in einer Ansicht von oben.

Auf das Bootsdeck 10, das beispielsweise undicht oder beschädigt ist, wird eine untere Schicht 12 gleichmäßig aufgetragen, die aus einem Gemisch von 25 Vol.-Teilen Epoxyharz, 20 Vol.-Teilen Härter und 25 Vol.-Teilen Sägespäne besteht.

Nach dem Aushärten dieser Schicht wird eine zweite Schicht 14 aufgetragen, die von gleicher Zusammensetzung ist wie die Schicht 12, aber zusätzlich einen Farbstoff enthält, der dem Gemisch die gewünschte Farbe verleiht, die die späteren Plankenzwischenräume aufweisen sollen. Nach dem Aushärten der Schicht 14 werden auf diese breitere Klebefolien-Streifen 16 und schmalere Klebefolien-Streifen 18 parallel nebeneinander aufgeklebt, wobei die Zwischenräume zwischen den Klebestreifen möglichst eng gehalten werden.

Danach werden die breiteren Klebefolien-Streifen wieder entfernt. Sie dienen somit lediglich dazu, die schmaleren Klebefolien-Streifen in parallel ausgerichteter Form auf den Bootsdeckbelag aufzubringen.

Anschließend wird dann die obere Schicht 20 auf die Schicht 14 bzw. die Klebefolien-Streifen 18 aufgetragen. Wenn die obere Schicht 20 soweit ausgehärtet ist, andererseits aber die Elastizität noch ausreicht, um die darunterliegende Schicht der schmaleren Klebefolien-Streifen 18 abzuziehen, werden diese abgezogen. Damit kommt an den Stellen, an denen die schmaleren Klebefolien-Streifen 18 abgezogen worden sind, die darunterliegende Schicht 14 zum Vorschein, die durch die Beimischung eines entsprechenden Farbstoffes den Eindruck der Bootsplankenzwischenräume wiedergibt.

Man erhält auf diese Weise einen Bootsdeckbelag, der eine natürliche Holzplankenstruktur nachbildet, wie er z.B. in der Figur 3 gezeigt ist.

In der Figur 6 ist die obere Schicht 20 größerer Breite zu erkennen, die jeweils seitlich an eine zweite Schicht 14 von unterschiedlicher Farbgestaltung anschließt, die den Eindruck der Plankenzwischenräume wiedergibt.
In der Mitte des Bootes befinden sich die Kajütenräume 22.

## Patentansprüche

1. Bootsdeckbelag, bestehend aus mindestens zwei nacheinander aufgetragenen Schichten aus einem Gemisch aus
a) langsam härtendem elastischem Epoxyharz,
b) Härter für das Epoxyharz und
c) einem festen körnigen bzw. feinteiligen Füllstoff niedriger Dichte.

2. Bootsdeckbelag nach Anspruch 1,
dadurch gekennzeichnet,
daß das Verhältnis von Epoxyharz zum Härter etwa 3 : 1 bis 1 : 3 Vol.-Teile beträgt.

3. Bootdeckbelag nach Anspruch 1,
dadurch gekennzeichnet,
daß der Anteil an Füllstoff 20 bis 80 Vol.-% beträgt, bezogen auf das Gesamtvolumen von Epoxyharz, Härter und Füllstoff.

4. Bootsdeckbelag nach Anspruch 1,
dadurch gekennzeichnet,
daß das Verhältnis von Epoxyharz, Härter und Füllstoff etwa 25 : 25 : 50 Vol.-Teile beträgt.

5. Bootsdeckbelag nach Anspruch 1,
dadurch gekennzeichnet,
daß die Härtezeit des Gemisches etwa drei bis achtundvierzig Stunden beträgt.

6. Bootsdeckbelag nach Anspruch 5,
dadurch gekennzeichnet,
daß die Härtezeit etwa vierundzwanzig Stunden beträgt.

7. Bootsdeckbelag nach Anspruch 1,
dadurch gekennzeichnet,
daß dieser aus zwei bis fünf Schichten besteht.

8. Bootsdeckbelag nach Anspruch 1,
dadurch gekennzeichnet,
daß dem Gemisch zumindest einer Schicht Farbstoffe oder Farbpigmente zugemischt werden.

9. Bootsdeckbelag nach Anspruch 1,
dadurch gekennzeichnet,
daß das Füllmaterial aus Sägespänen besteht.

10. Verfahren zur Herstellung des Bootsdeckbelages nach einem der Ansprüche 1 bis 9,
dadurch gekennzeichnet,
daß die untere Schicht der Beschichtung aushärten lassen wird und danach eine oder mehrere weitere Schichten aufgetragen werden, und zwar beim Auftragen mehrerer Schichten jeweils nach dem Aushärten der darunterliegenden Schicht.

11. Verfahren nach Anspruch 10,
dadurch gekennzeichnet,
daß die jeweils untere Schicht vor dem Auftragen der nächsten Schicht mit einer Trennschicht abgedeckt wird.

12. Verfahren nach Anspruch 11,
dadurch gekennzeichnet,
daß als Trennschicht eine abziehbare Klebefolie verwendet wird.

13. Verfahren nach einem der Ansprüche 10 bis 12,
dadurch gekennzeichnet,
daß dem Gemisch für die abschließend zweitoberste, ggfs. zuvor auch dem der abschließend drittobersten Schicht ein für die Zwischenräume eines Holzplankenmusters vorgesehener Farbstoff bzw. ein Farbpigment zugesetzt wird,
daß nach dem Aushärten dieser Schicht jeweils breitere und schmalere Klebefolien-Streifen nebeneinander aufgeklebt werden,
daß die breiteren Klebefolien-Streifen wieder entfernt werden;
die abschließend oberste, oder ggfs. zuvor auch die abschließend zweitoberste Schicht aufgetragen wird, und
daß anschließend die schmaleren Klebefolien-Streifen entfernt werden.

14. Verfahren nach einem der Ansprüche 10 bis 13,
dadurch gekennzeichnet,
daß zumindest für die oberste Schicht Sägespäne als Füllstoff verwendet werden.

15. Verfahren nach einem der Ansprüche 10 bis 14,
dadurch gekennzeichnet,
daß auf die oberste Schicht vor dem Aushärten Sand als Antislip-Material aufgetragen wird.

## Claims

1. Boat deck covering comprising at least two successively applied layers of a mixture made of
a) slow-hardening elastic epoxy resin,
b) hardener for the epoxy resin, and
c) a low-density solid granular or fine-particle filler.

2. Boat deck covering according to claim 1, characterised in that the ratio of epoxy resin to hardener is approximately 3 : 1 to 1 : 3 parts by volume.

3. Boat deck covering according to claim 1, characterised in that the proportion of filler is 20 to 80% by volume relative to the total volume of epoxy resin, hardener and filler.

4. Boat deck covering according to claim 1, characterised in that the ratio of epoxy resin, hardener and filler is approximately 25 : 25 : 50 parts by volume.

5. Boat deck covering according to claim 1, characterised in that the hardening time of the mixture is approximately three to forty-eight hours.

6. Boat deck covering according to claim 5, characterised in that the hardening time is approximately twenty-four hours.

7. Boat deck covering according to claim 1, characterised in that it comprises two to five layers.

8. Boat deck covering according to claim 1, characterised in that dyestuffs or colouring pigments are added to the mixture of at least one layer.

9. Boat deck covering according to claim 1, characterised in that the filler material consists of sawdust.

10. Method for producing the boat deck covering according to one of claims 1 to 9, characterised in that the lower layer of coating is allowed to harden, and afterwards one or several further layers are applied, with each layer being applied, in the case of the application of several layers, after the layer beneath it has hardened.

11. Method according to claim 10, characterised in that the respective lower layer is covered with a separation layer before the next layer is applied.

12. Method according to claim 11, characterised in that a pull-off adhesive sheet is used as the separation layer.

13. Method according to one of claims 10 to 12, characterised in that
a dyestuff or colouring pigment provided for the intermediate spaces in a wooden planking pattern is added to the mixture for the second uppermost final layer and, if necessary, is also added beforehand to the mixture for the third uppermost final layer,
and in that, after this layer has hardened,
respectively wider and narrower strips of adhesive sheeting are stuck on side by side,
and in that the wider strips of adhesive sheeting are removed again;
the uppermost final layer is applied or, if necessary, the second uppermost final layer is also applied beforehand,
and in that the narrower strips of adhesive sheeting are removed afterwards.

14. Method according to one of claims 10 to 13, characterised in that sawdust is used as the filler, at least for the uppermost layer.

15. Method according to one of claims 10 to 14, characterised in that sand is applied as a non-slip material to the uppermost layer before hardening.

## Revendications

1. Revêtement de pont pour un bateau comprenant au moins deux couches appliquées l'une après l'autre composées d'un mélange:
a) d'une résine époxy élastique à durcissement lent,
b) d'un durcisseur pour la résine époxy et
c) d'une matière de charge rigide à faible densité en forme de granules ou de petites particules.

2. Revêtement de pont pour bateau selon la revendication 1, caractérisé en ce que la proportion entre la résine époxy et le durcisseur est comprise entre environ 3:1 et 1:3 parties en volume.

3. Revêtement de pont pour bateau selon la revendication 1, caractérisé en ce que la proportion de matière de charge est comprise entre 20 et 80% en volume, en se rapportant au volume total de résine époxy, de durcisseur et de matière de charge.

4. Revêtement de pont pour bateau selon la revendication 1, caractérisé en ce que la proportion de résine époxy, de durcisseur et de matière de charge est d'environ 25 : 25 : 50 parties en volume.

5. Revêtement de pont pour bateau selon la revendication 1, caractérisé en ce que le temps de durcissement du mélange est compris entre 3 et 48 heures.

6. Revêtement de pont pour bateau selon la revendication 1, caractérisé en ce que le temps de durcissement est environ égal à 24 heures.

7. Revêtement de pont pour bateau selon la revendication 1, caractérisé en ce que celui-ci est constitué de deux à cinq couches.

8. Revêtement de pont pour bateau selon la revendication 1, caractérisé en ce qu'au moins une couche de colorant ou de pigment colorés est additionnée au mélange.

9. Revêtement de pont pour bateau selon la revendication 1, caractérisé en ce que la matière de charge est constituée de sciure.

10. Procédé de réalisation du revêtement de pont pour bateau selon l'une quelconque des revendications 1 à 9, caractérisé en ce qu'on laisse durcir la couche inférieure du revêtement et qu'on applique ensuite une ou plusieurs autres couches, et lorsqu'on applique plusieurs couches, en appliquant chacune après le durcissement de la couche qui se trouve au-dessous d'elle.

11. Procédé selon la revendication 10, caractérisé en ce que la couche inférieure respective est recouverte d'une couche de séparation avant l'application de la couche suivante.

12. Procédé selon la revendication 11, caractérisé en ce que l'on utilise une feuille autocollante pelable en tant que couche de séparation.

13. Procédé selon l'une quelconque des revendications 10 à 12, caractérisé en ce que l'on ajoute du colorant, ou un pigment coloré, prévu pour les espaces intermédiaires d'un motif en forme de planche de bois, au mélange pour l'avant-dernière couche finale, et éventuellement également auparavant au mélange pour la couche qui précède l'avant-dernière couche, en ce qu'après le durcissement de cette couche, on colle les unes à côtés des autres des bandes de feuille autocollante respectivement larges et étroites, en ce que l'on enlève les bandes de feuille autocollante larges, en ce qu'on applique la couche supérieure finale, ou éventuellement également auparavant l'avant-dernière couche finale, et en ce que l'on enlève ensuite les bandes de feuille autocollante étroites.

14. Procédé selon l'une quelconque des revendications 10 à 13, caractérisé en ce que l'on utilise en tant que matière de charge des sciures, au moins pour la couche située le plus en haut.

15. Procédé selon l'une quelconque des revendications 10 à 14, caractérisé en ce que l'on applique du sable en tant que matériau antidérapant sur la couche située le plus en haut et avant le durcissement.
